# EUROPEAN PATENT APPLICATION

(11) **EP 2 124 287 A2**
(43) Date of publication of application: **25.11.2009**
(21) Application number: 09250115.4
(22) Date of filing: 16.01.2009
(51) Int. Cl.: H01M 10/48

(54) **Device with window for viewing fuel gauge on battery**

(30) Priority: 23.05.2008 US 126191
(71) Applicant: Techtronic Industries Company Limited, Tsuen Wan New Territories Hong Kong (CN)
(72) Inventor: Patrick, Robert A., Simpsonville, SC 29681 (US); van Arsdale, Keith, Pendleton, SC 29670 (US); Saunders, William James, Anderson, SC 29621 (US); Yoong, Kuo-Liang Leon, Wheelers Hill Victoria 3150 (US)
(74) Representative: Martin, David John

(57) **Abstract**

A battery powered device that includes a battery pack having a fuel gauge to display a state of charge of the battery pack. The fuel gauge is located on the battery pack such that when the battery pack is engaged with the battery powered device the fuel gauge is visible through a window provided on the housing of the device.

## Description

### BACKGROUND

This invention relates generally to an electrical device powered by a battery having a charge indicator.

It is known to provide battery packs with displays (sometimes referred to as fuel gauges) to show the charge state of the battery pack. Generally, the display is provided on the battery housing itself. Although this may be convenient, it can be improved.

### BRIEF SUMMARY

The invention provides an electrically powered device comprising a device housing having an actuator to energize the device and defining a window, a battery pack selectively engageable with a portion of the device housing and including a battery pack housing within which at least one battery cell is disposed, and a fuel gauge disposed on a portion of the battery pack housing such that when the battery pack is engaged with the device housing, the fuel gauge is registered with and visible through the window. The device can be any battery powered device including, but not limited to, fans, radios, cutters, sprayers, tools, etc.

The battery pack may include a latching mechanism to selectively secure the battery pack to the housing wherein the latching mechanism includes at least one button such that upon actuation of the button the fuel gauge displays a condition of the battery pack. The battery pack may further include a second actuator such that upon actuation of the second actuator the fuel gauge displays a condition of the battery pack.

### BRIEF DESCRIPTION OF THE DRAWINGS

Embodiments of the invention are now described, by way of example only, with reference to the following drawings in which:

Fig. 1 is a side view of a device in the form of a power tool incorporating the window of the present invention and one embodiment of a battery having a fuel gauge located on the battery such that the fuel gauge on the battery is visible through a window provided on the tool housing.

Fig. 2 is an exploded side view of the device of Fig. 1 with the battery having a fuel gauge located on a portion of the battery.

Fig. 3 is a side view of a device in the form of a power tool incorporating the window of the present invention and one embodiment of a battery having a fuel gauge located on the battery such that the fuel gauge on the battery is visible through a window provided on the tool housing.

Fig. 4 is an exploded side view of the device of Fig. 3 and incorporating a fuel gauge that can be viewed through a window provided on the device.

Fig. 5 is a schematic of a portion of a controller configured to cooperate with the fuel gauge of either Fig. 2 or Fig. 4.

### DESCRIPTION OF THE PREFERRED EMBODIMENTS

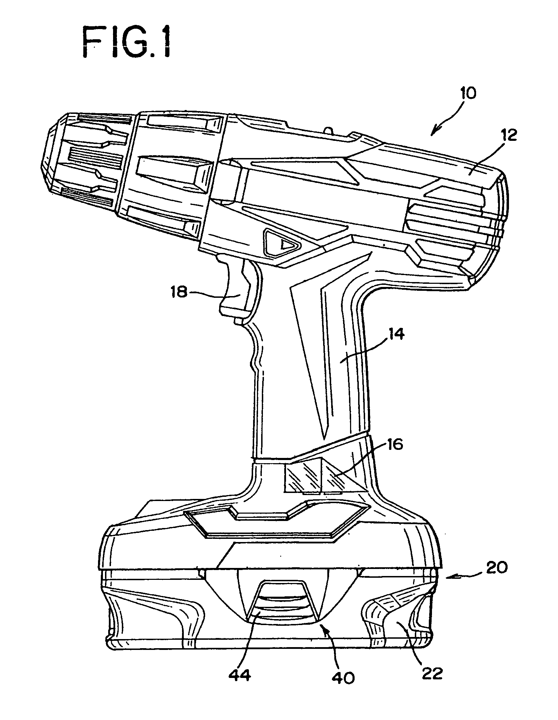

Figure 1 shows a cordless device 10 and, in particular, a drill and a battery pack 20 electrically connectable to the cordless device for powering the cordless device. The battery pack 20 may be charged in a charger (not shown) as is known. The cordless device 10 may be any type cordless device 10, but for simplicity of description it will be described in connection with a power tool and, in particular, a drill. It will of course be appreciated, that the cordless device 10 may include, but is not limited to screwdrivers, rotary tools, hand-held power tools, reciprocating saws, hammer drills, routers, circular saws, grinders, sanders, buffers, and the like, as well as outdoor tools such as trimmers, sprayers, saws, edgers, cutters, etc. In addition, it will be appreciated that the principles of the present invention can be applied to other types of battery powered devices such as flashlights, home appliances such as blenders, fans, radios, and the like.

The device 10 has a housing 12 and a motor (not shown) disposed in the housing for driving a tool or performing any other action. The particular device 10 shown in Fig. 1 has a handle 14 for gripping by the user.

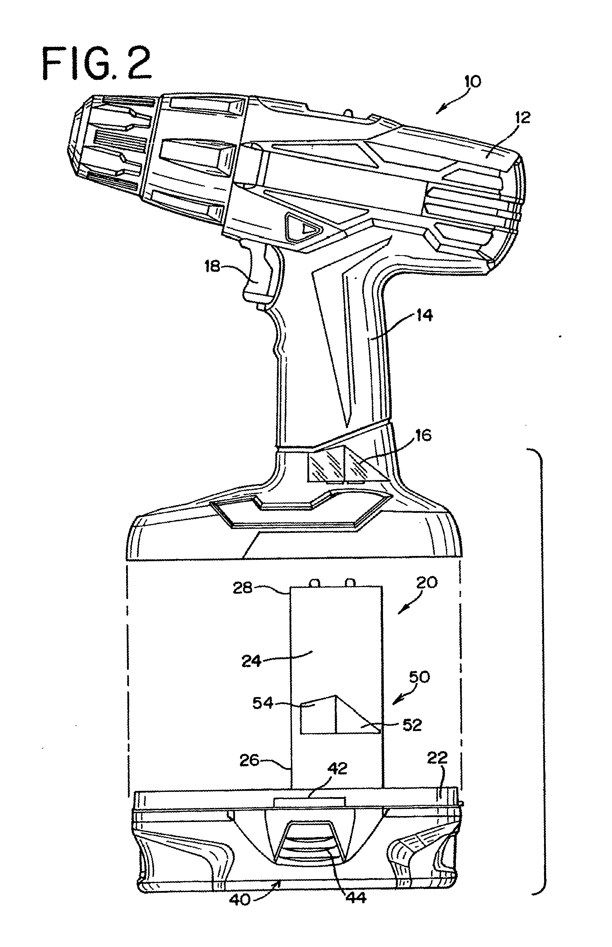

The device 10 is electrically connectable to a battery pack 20. The battery pack 20 has a housing 22 and at least one battery cell disposed within the housing 22. The cell may have a chemistry of seal lead acid, hydrogen, methanol fuel cell, lithium, lithium-ion, nickel cadmium, nickel metal hydride or other suitable battery chemistry, which those of skill in the art can appreciate. The battery pack 20 shown in the particular embodiment of Fig. 2 has a stem 24 that extends from the housing 22 to define a proximal end 26 and a distal end 28. The stem 24 has battery terminals (not shown) that connect with device terminals (not shown) of the device to provide an electrical connection. The battery terminals may be located at the distal end 28.

The stem 24 is configured to be slidably received by the handle 14. In some embodiments, the stem 24 is configured to be slidably received by the handle 14 of the device 10 in a manner such that the stem 24 can be engaged with the handle 14 only when the stem 24 is in mating relationship with the handle 14. Because the stem 24 is configured in this manner, the battery pack 20 can not pivot about the axis of the handle 14 when the battery pack 20 is engaged with the handle 14 of the device 10.

At least one of the battery pack 20 and the device 10 has a latching mechanism 40 for temporarily engaging the other of the battery pack 20 and the device 10 to selectively secure the battery pack 20 and the device 10 together. Referring to Figs. 1 and 2, the latching mechanism 40 includes a latch 42 that engages the device housing 12, and a button 44 that can be moved by the user to move the latch 42 to an unlatched position so that the battery pack 20 can be removed from the device 10.

Because the battery pack 20 includes rechargeable battery cells, the battery pack 20 may be electrically connectable to a charger (not shown) for charging the battery cells. The battery pack 20 has a fuel gauge 50 to display a state of charge of the battery cell(s) within the battery pack 20. The fuel gauge 50 is incorporated in at least a portion of the battery housing 22. The fuel gauge 50 is located on the battery pack 20 at a location such that it is registered with a window 16 provided on the device housing 12 and such that the fuel gauge 50 is visible through the window 16. The window 16 may be open or covered with a material through which the fuel gauge 50 can be viewed. In this regard, the window 16 can be translucent or transparent.

With respect to the embodiment shown in Figs. 1 and 2, the fuel gauge 50 is located on the stem 24 portion of the battery pack 20 typically between the proximal end 26 and the distal end 28. It will be appreciated that by locating the fuel gauge 50 in this manner, the fuel gauge 50 will not only be visible when the battery pack 20 is engaged and is not engaged with the device housing 12 but also the fuel gauge 50 will be protected by the device housing 12 when the battery pack 20 is engaged with the device housing 12.

The fuel gauge 50 can include a display 52, which may take any of several forms. For instance, the display 52 may have at least one and may have two or more indicator lights 54 (e.g. light-emitting diodes) one of which is green and the other red. The green light may be illuminated when the state of charge of the battery pack 20, 30 is acceptable and the red light may be illuminated when the state of charge of the battery pack 20 is low.

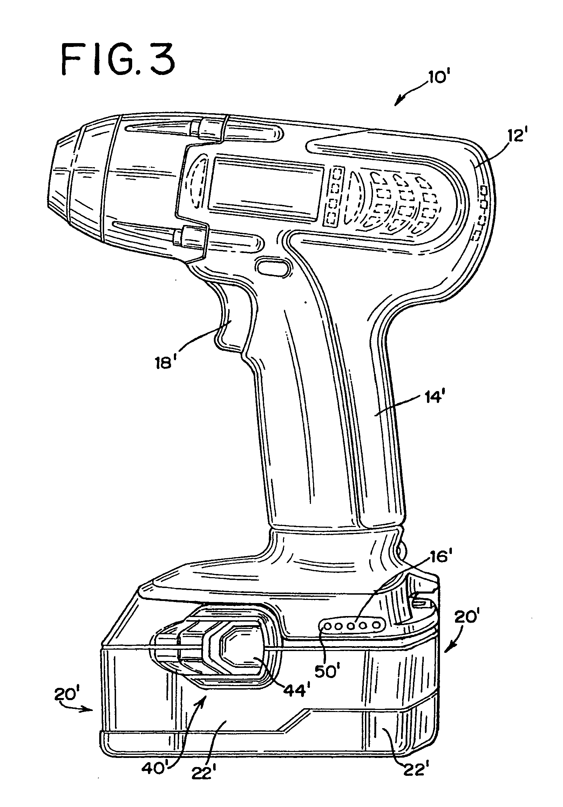

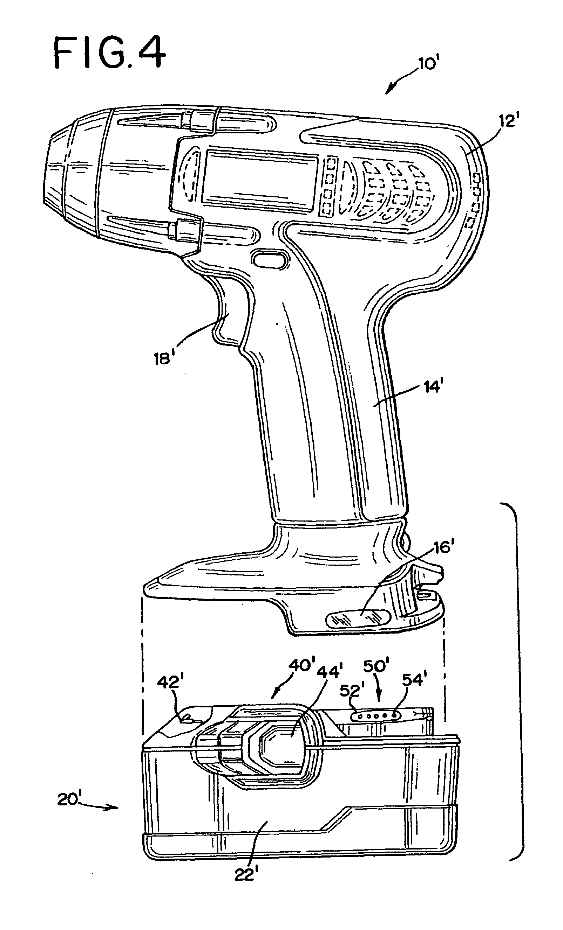

Figs. 3 and 4 show another embodiment of a battery pack 20' incorporating features of the present invention. The battery pack 20' includes a housing 22' within which at least one battery cell (not shown) is located. The housing 22' has a pair of rails 34 that engage corresponding structure provided at the foot of the handle 12' of the device housing 12'.

With respect to the embodiment shown in Figs. 3 and 4, because the battery pack 20' includes rechargeable battery cells, the battery pack 20' may be electrically connectable to a charger (not shown) for charging the battery cells. The battery pack 20' has a fuel gauge 50' to display a state of charge of the battery cell(s) within the battery pack 20'. The fuel gauge 50' is located on or adjacent a rail 34 of the battery pack housing 22'. In addition, the fuel gauge 50' is located on the battery pack 20' at a location such that it is registered with a window 16' provided on the device housing 12' and such that the fuel gauge 50' is visible through the window. It will be appreciated that by locating the fuel gauge 50' in this manner, the fuel gauge 50' will not only be visible when the battery pack 20' is engaged and is not engaged with the device housing 12' but also the fuel gauge 50' will be protected by the device housing 12' when the battery pack 20' is engaged with the device housing 12'. The window 16' may be open or covered with a material through which the fuel gauge 50' can be viewed. In this regard, the window 16' can be translucent or transparent.

The display 52' can also include a series of indicator lights 54' (e.g., light-emitting diodes) arranged to form a scale. In this instance, the lights 54' are arranged in a horizontal manner. Of course, the lights 54' could be arranged in any suitable manner so long as they register with the window 16'. A number of indicator lights 54' can be illuminated when the battery state of charge is high and one or no lights 54' can be illuminated to show that the battery state of charge is low. In other embodiments, one light can flash to show that the battery state of charge is low. In further embodiments, the display 52' can include other display screens and/or indicator lights having other relative orientations and positions and can include indicator lights of different colors (e.g., green, blue, yellow, orange, and red) for displaying the state of charge of the battery. In still further embodiments, the display 52' can be used to inform the user of other conditions, such as, for example, abnormal (high or low) battery temperature, an electrical fault within the electrical circuit, or other information pertaining to the battery or the device. Advantageously, the state of charge of the battery pack 20' can be determined prior to coupling the battery pack 20' with the device 10'.

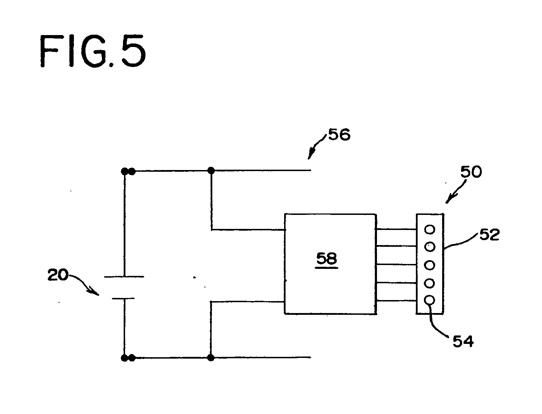

As illustrated in Fig. 5, the fuel gauge 50 and 50' is associated with an electrical circuit 56 that includes a controller 58 for performing various functions, such as, for example, measuring various battery pack 20, 20' conditions (e.g., state of charge of battery cell), controlling the fuel gauge, controlling operation of the tool, and gathering and storing data pertaining to the device 10 operation or battery pack 20, 20' conditions.

In some embodiments, the controller 58 is programmed to measure the state of charge in response to movement of the button 44, 44' associated with the latch mechanism 40, 40'. In this regard, movement of the button 44, 44' such as by depressing the button 44, 44', which moves the latch 42, 42', causing a signal to be sent to the controller 58 to measure the state of charge of the battery pack 20, 20' and to send a signal to the display 52, 52'. In certain embodiments, only one button 44, 44' need be actuated (depressed) to actuate the operation of the controller 58. In other embodiments, both buttons need be depressed (simultaneously or substantially simultaneously) in order to actuate operation of the controller 58.

It will be appreciated, that the battery state of charge data may be measured prior to activation of the motor; that is, before the battery state of charge is affected by the current draw being supplies to the motor. This measurement of the battery state of charge represents an at rest state of charge of the battery pack 20, 20'. In this instance the at rest state of charge measurement is displayed by the fuel gauge 50, 50'. The state of charge data may be displayed for a predetermined time after the button 44, 44' is actuated. The predetermined time may be any suitable selected time such as a few seconds. Of course, it will be understood that the selected time can be greater than a few seconds or can be less than a few seconds. After the selected time is exceeded, the display can be cleared. In one embodiment, the display 52, 52' is cleared when the selected time expires regardless of whether the button 44, 44' is still actuated. In some embodiments, the display 52, 52' is cleared prior to expiration of the selected time (e.g., approximately a few seconds) when the button 44, 44' is released.

It is also contemplated that the controller 58 may operate to cause a measurement and display of the battery state of charge when the trigger 18, 18' (or other device for activating the motor or operation of the device) is actuated instead of when the latch button 44, 44' is actuated. Further, it is contemplated that the controller 58 may operate to cause a measurement and display of the battery state of charge when a button, latch, or actuator other than the above-described trigger 18, 18' or button 44, 44' are actuated. In this regard, either the battery housing 22, 22' or the device housing 12, 12' may have a button that, when actuated, will cause the display 52 to indicate the state of charge of the battery pack 20, 20'.

Because the fuel gauge 50, 50' is located on the battery pack 20, 20', the device housing 12, 12' is provided with a window 16, 16' that is registered with the fuel gauge 50, 50' when the battery pack 20, 20' is coupled with the device 10, 10' and through which the fuel gauge 50, 50' is visible. The window 16, 16' is located, sized, and shaped in a manner that is complementary to the size and shape of the display 52, 52'. Accordingly, even when the battery pack 20, 20' is coupled with the device 10, 10', the display 52, 52' for the fuel gauge 50, 50' is still visible.

Thus, the present invention provides an easily viewable fuel gauge 50, 50' for a battery powered device 10, 10'. The foregoing description of the invention has been presented for purposes of illustration and description, and is not intended to be exhaustive or to limit the invention to the precise form disclosed. It will be apparent to those skilled in the art that the present invention is susceptible of many variations and modifications coming within the scope of the following claims. These additions and/or alterations are considered to be equivalents of the present invention. Though the present invention is described above in connection with a tool, and particularly in connection with a drill, it should be understood that the present invention is not limited and various modifications will be apparent to those of skill in the art. It is therefore not intended that the present be limited to the disclosed embodiments or details but that the present invention includes all variations and alternative embodiments with the scope of the present invention as defined in the claims.

## Claims

1. An electrically powered device comprising;
a. a device housing having an actuator to energize the device and defining a window;
b. a battery pack selectively engageable with a portion of the device housing and including a battery pack housing within which at least one battery cell is disposed; and,
c. a fuel gauge disposed on a portion of the battery pack housing such that when the battery pack is engaged with the device housing, the fuel gauge is registered with and visible through the window.

2. The device of claim 1 wherein the battery pack includes a latching mechanism to selectively secure the battery pack to the housing wherein the latching mechanism includes at least one button such that upon actuation of the button the fuel gauge displays a condition of the battery pack.

3. The device of claim 1 wherein upon actuation of the actuator the fuel gauge displays a condition of the battery pack.

4. The device of any preceding claim further comprising a second actuator such that upon actuation of the second actuator the fuel gauge displays a condition of the battery pack.

5. The device of any preceding claim wherein the device is a handheld battery powered device.

6. The device of claim 5 wherein the device is a handheld battery powered tool.

7. The device of any preceding claim, wherein the device is a drill.
